# FASCICULE DE BREVET EUROPEEN

(11) **EP 0 393 050 B1**
(45) Date de publication et mention de la délivrance du brevet: **29.03.1995**
(21) Numéro de dépôt: 88908257.4
(22) Date de dépôt: 27.09.1988
(51) Int. Cl.: G06F 1/00, G06F 12/14

(54) **DISPOSITIF DE PROTECTION DES ZONES MEMOIRE D'UN SYSTEME ELECTRONIQUE A MICROPROCESSEUR**
EINRICHTUNG ZUM SCHÜTZEN VON SPEICHERZONEN EINES ELEKTRONISCHEN SYSTEMS MIT MIKROPROZESSOR
DEVICE FOR PROTECTING MEMORY AREAS OF AN ELECTRONIC MICROPROCESSOR SYSTEM

(30) Priorité: 02.10.1987 FR 8713936
(43) Date de publication de la demande: 24.10.1990
(73) Titulaire: SGS-THOMSON MICROELECTRONICS S.A., 94250 Gentilly (FR)
(72) Inventeur: SOURGEN, Laurent, F-13100 Aix-en-Provence (FR); UHLMANN, Rodolphe, Route de Nice F-13100 Aix-en-Provence (FR)
(74) Mandataire: Schmit, Christian Norbert Marie
(86) Numéro de dépôt international: FR8800474
(87) Numéro de publication internationale: WO8903081

(56) Documents cités:
- US-A- 4 590 552
- US-A- 4 665 506
- IBM Technical Disclosure Bulletin, vol. 15, no. 12, mai 1973 (New York, US), R. Geng et al.: "Control-programmed switchable local storage"

## Description

La présente invention a pour objet un dispositif de protection des zones mémoire d'un système électronique à microprocesseur. Elle concerne d'une manière générale le domaine des ordinateurs, et plus particulièrement le domaine des cartes à mémoire dont l'organe de mémorisation, inséré dans une carte, comporte un circuit intégré électronique géré par un microprocesseur. Le dispositif de l'invention pourrait en outre être utilisé dans le domaine de la protection des logiciels où, par une programmation astucieuse, il peut facilement empêcher la duplication ou l'édition de programmes qu'on tient à garder secrets. Il peut aussi avoir pour but d'éviter les conséquences fâcheuses de certaines fausses manoeuvres.

Dans les systèmes électroniques à microprocesseurs, notamment dans les applications de type monétique des cartes à mémoire, il est nécéssaire de réserver les conditions d'accès à certaines zones mémoire du système. En particulier on cherche à empêcher toute tentative de fraude par la lecture de zones théoriquement interdites dans ces cartes. Il s'agit par exemple des zones contenant le code secret d'utilisation de la carte. Par contre les mémoires des cartes à mémoire comportent d'autres zones, en particulier celles qui représentent un solde, dont la signification des informations enregistrées doit pouvoir être modifiée. On est alors confronté à une situation dans laquelle des zones mémoire différentes doivent pouvoir ou non être lues. Par ailleurs, dans des zones d'un autre type de la mémoire, des instructions à exécuter par le microprocesseur peuvent être également stockées. Dans ces zones d'un autre type on rencontre la même dualité, certaines instructions peuvent être laissées à la disposition de l'utilisateur, l'usage d'autres instructions doit lui être par contre interdit.

Dans une situation plus complexe, et plus réaliste, certaines instructions sont en elles-mêmes banales, mais ne deviennent critiques pour la confidentialité du système que si elles sont appliquées à certains types de données. Par exemple, une instruction d'édition ne présente aucun caractère dangereux si , avec certaines précautions, elle est appliquée à l'édition du solde d'un compte. Par contre, elle devient beaucoup plus critique si elle est appliquée à l'édition du code secret de transaction avec la carte à mémoire en question. On connaît des solutions de l'état de la technique où l'empêchement d'exécution de ces actions interdites est obtenu par des instructions supplémentaires que l'on peut introduire dans le système. En définitive un tel système fonctionne avec un logiciel dont certaines instructions sont destinées à empêcher l'exécution des actions interdites. Cependant, autant il a été possible d'introduire ces instructions, autant il peut être possible, avec un logiciel supplémentaire, de neutraliser ces instructions d'interdiction. De plus ces instructions d'interdiction compliquent le système et peuvent ralentir l'exécution des instructions autorisées.

L'invention a pour objet de remédier à ces inconvénients et de proposer un dispositif simple, qui n'emprunte pas au logiciel, mais plutôt au matérel, et dont l'adjonction dans les systèmes ne constitue aucune complication de l'utilisation de ce système, ni non plus de ralentissement de sa vitesse de travail. Le principe de l'invention réside dans la construction d'une matrice de décision qui reçoit par exemple, en temps réel, les adresses des instructions à exécuter et des données sur lesquelles doivent s'exécuter ces instructions. La matrice de décision élabore un signal de validation du fonctionnement du système lorsque l'application des instructions aux données en question peut être autorisée.

Plutôt que de prendre en compte les instructions et les données elles-mêmes, la matrice de décision est susceptible de travailler sur les adresses des instructions et des données concernées. Ceci présente l'avantage, lorsque des codes secrets sont produits ultérieurement à la fabrication du circuit intégré, que la matrice de décision peut rester inchangée sous réserve que ces codes secrets soient rangés à une adresse déterminée à l'avance, mais quel que soit leur contenu. Dans ces conditions la matrice de décision peut être fabriquée en même temps que le circuit intégré. Ceci a deux avantages : premièrement il n'est pas nécéssaire de programmer ultérieurement cette matrice. Deuxièmement, ayant été définie dès le début de la fabrication elle peut bénéficier de toutes les protections technologiques que l'on est en mesure d'accorder aux autres parties du circuit.

L'invention a en conséquence pour objet un dispositif de protection de zones mémoires d'un système électronique à microprocesseur tel que défini dans la revendication 1.

L'état de la technique décrit soit dans US-A-3 377 624 soit dans EP-A-0 150 522 concerne des circuits permettant ou interdisant l'accès aux adresses d'une zone de mémoire, à partir d'une instruction lue à l'adresse dans une autre zone de la mémoire. Cet état de la technique n'utilise pas une matrice préprogrammée adressée simultanément par les deux adresses relatives aux deux zônes.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- figure 1 : un système électronique à microprocesseur à protéger ;
- figures 2a à 2d : des diagrammes temporels de signaux logiques utiles à faire fonctionner le dispositif de protection de l'invention ;
- figure 3 : une représentation schématique d'un dispositif de protection conforme à l'invention.

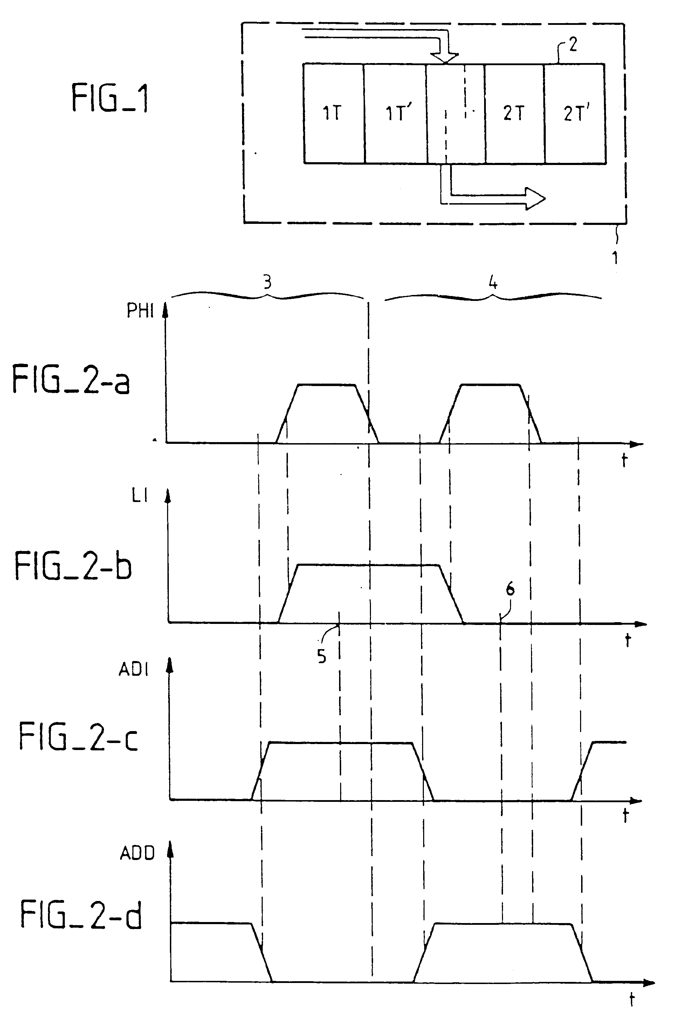

La figure 1 représente un système électronique à microprocesseur 1 muni d'une mémoire 2 possédant des zones mémoire d'un premier type : 1T, 1T′... et des zones mémoire d'un deuxième type 2T, 2T′... Ces zones mémoire peuvent appartenir à une seule mémoire, ou à des mémoires différentes. Elles peuvent aussi appartenir à des mémoires de technologies différentes, par exemple des mémoires de type statique, des mémoires de type dynamique, ou des mémoires non volatiles (EPROM ou EEPROM). Elles peuvent aussi etre des mémoires de fonctionnalités différentes, par exemple à accès aléatoire ou bien des mémoires mortes. En pratique les zones d'un premier type peuvent être des zones où sont rangées des instructions, et les zones d'un deuxième type peuvent être des zones où sont rangées des données. D'une manière plus générale les zones d'un premier ou d'un deuxième type peuvent même être des zones où sont en fait rangées des adresses d'instructions ou de données.

Le microprocesseur du système 1 fonctionne de la manière suivante : pendant un cycle 3 d'une séquence d'exécution d'instructions le microprocesseur prélève une instruction dans une zone d'un premier type : 1T ou 1T′. Pendant le cycle 4 suivant, il prélève dans les zones de données 2T ou 2T′ les données sur lesquelles l'instruction préalablement extraite doit être appliquée. Eventuellement la succession ces cycle pourraît être inversée sans qu'il en résulte une modification profonde de l'invention. Dans un exemple préféré de réalisation, les transports des informations entre la mémoire et le microprocesseur sont faits par un bus unique dont l'affectation à la lecture des zones des différents types de la mémoire est imposée par un signal LI de lecture d'instructions . Un signal PHI constitue l'horloge du système : il synchronise les différentes opérations.

Le fonctionnement typique d'un tel microprocesseur est le suivant (figures 2a à 2d) : pendant le premier cycle 3 une adresse ADI d'une instruction décodée par le décodeur de la mémoire est appliquée à la mémoire. A une date 5 dans le cycle 3, le contenu de cette instruction est envoyé au microprocesseur. Cet envoi est validé par l'ordre LI de lecture d'instructions. Pendant le cycle 4 suivant, une adresse de données ADD est appliquée à la mémoire, et les données contenues à cette adresse sont transférées au microprocesseur à une date 6 pour un état inverse du signal LI.

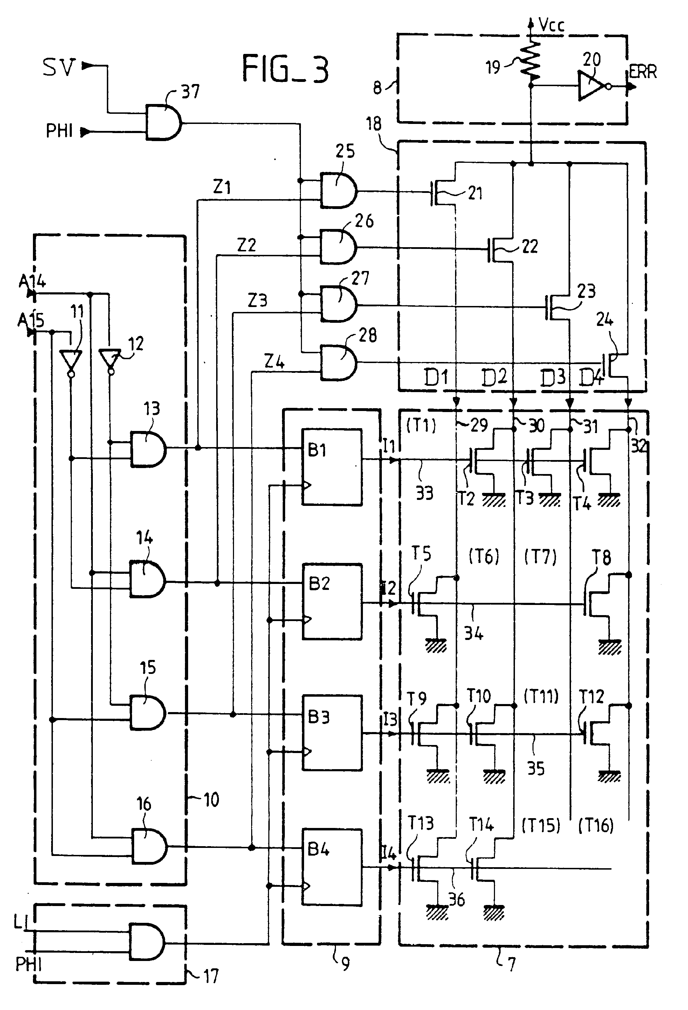

Sur la figure 3 on a représenté un dispositif conforme à l'invention. Un circuit de décision 7 reçoit, lui aussi par l'intermédiaire d'un décodeur 10, les signaux d'adresses relatifs aux informations stockées dans les zones mémoire. Pour les adresses d'un premier type de zone dans la mémoire, celles des instructions, il reçoit les signaux I1 à I4. Il reçoit également les signaux d'adresse relatifs aux informations stockées dans les zones mémoire de deuxième type, celles des données : les signaux D1 à D4. Le dispositif de l'invention comporte un circuit 8 pour valider le fonctionnement du système en fonction d'un signal délivré par le circuit de décision 7 en réponse aux signaux d'adresse que celui-ci a reçus.

D'une manière préférée, comme on l'a vu précédemment, l'accès aux informations stockées à des adresses de différents types de zone est commandé par des signaux d'orientation. Ici le signal d'orientation qui a été décrit est le signal de lecture d'instructions LI. Dans l'invention on utilise alors de préférence un registre-tampon 9 pour recevoir, en fonction de l'état du signal d'orientation, des signaux d'adresse relatifs aux informations stockées dans les zones du premier type, dans les zones d'instruction. Pendant le cycle 3, le registre tampon reçoit des signaux d'adresse I1 à I4. Il les garde jusqu'à ce qu'il reçoive un ordre de remise à zéro. L'existence de ce registre-tampon permet de n'utiliser qu'un seul décodeur 10 pour décoder toutes les adresses des informations à extraire à des périodes différentes pendant la séquence : pendant le cycle 3 ou le cycle 4. Lorsque le cycle 4 s'exécute, le registre 9 délivre en sortie les signaux d'adresse I1 à I4 tandis que le décodeur 10 fournit des signaux d'adresse D1 à D4. Au temps de cycle suivant, qui peut être équivalent à un cycle de l'horloge intrinsèque du microprocesseur, le circuit de validation 8 peut délivrer un signal d'erreur ERR avant la fin de l'exécution par le microprocesseur de l'instruction qu'on lui a donnée à exécuter.

Dans un exemple simple de réalisation on considèrera que la mémoire est répartie en quatre zones : des zones 1T, 1T′, 2T et 2T′. On peut alors utiliser pour des adresses codées sur un certain nombre de bits, par exemple sur seize bits, les deux bits de poids fort A14 et A15 pour déterminer à quelles zones de la mémoire on a affaire. Par exemple, pour le couple A15-A14 valant 0-0 on peut avoir affaire à la zone 1T, pour 0-1 à la zone 1T′, pour 1-0 à la zone 2T, et pour 1 -1 à la zone 2T′. Le décodeur 10 qui reçoit les signaux d'adresse peut transformer ces bits d'adresse, selon la zone concernée, en des signaux Z1, Z2, Z3 et Z4. Selon le cycle pendant lequel ces signaux sont élaborés on peut admettre qu'ils représentent les signaux d'adresse I1 à I4 des instructions ou les signaux d'adresse D1 à D4 des données. Le décodeur 10 est de type classique : il comporte notamment pour chaque entrée des bits d'adresse pris en compte, un inverseur 11 ou 12, et un jeu de quatre portes ET 13 à 16 pour produire les signaux Z1 à Z4 à partir du couple des bits d'adresse A14-A15. Le registre-tampon 9 comporte quatre bascules B1 à B4 recevant respectivement les signaux Z1 à Z4 d'une part, et un signal de blocage et de remise à zéro d'autre part. Les signaux de blocage et de remise à zéro sont délivrés par un circuit 17 dit d'introduction. Le circuit 17 permet l'introduction dans le circuit 7, pendant le déroulement du cycle 4, des signaux d'adresse I1 à I4 qui ont été appliqués pendant le cycle 3 sur les bascules B1 à B4 du registre-tampon 9. Les sorties des bascules B1 à B4 sont reliées à quatre connexions respectivement 33 à 36.

Dans une première variante le fonctionnement de ce circuit est le suivant : les adresses A14-A15 sont décodées et produisent les signaux Z1 à Z4. A chaque cycle un seul de ces signaux Z1 à Z4 est à un niveau un, les trois autres sont à zéro. Par exemple si l'adresse décodée correspond à la zone 1T alors Z1 sera à un. Pendant le cycle 4 les signaux de données D1 à D4 sont transmis au circuit de décision 7 par un circuit d'adaptation 18.

Le circuit d'adaptation 18 est présenté ici à titre indicatif. Il pourrait avoir une toute autre allure, ou bien même être absent dans une autre réalisation du dispositif de l'invention. Dans l'exemple, le circuit de validation 8 comporte une résistance 19 reliée à l'alimentation générale du système électronique à microprocesseur d'une part, et au circuit d'adaptation 18 d'autre part. Cette résistance peut être réalisée dans des technologies diverses : elle peut être une résistance diffusée, être une résistance en polysilicium, ou encore un transistor monté en résistance à la limite de la conduction. A l'endroit où la résistance 19 est reliée au circuit 18, un inverseur 20 prélève une tension disponible et délivre en sortie le signal de validation ERR recherché. Le circuit d'adaptation 18 comporte un jeu de quatre transistors 21 à 24 reliés d'une part en commun à la résistance 19 et d'autre part, par quatre connexions 29 à 32, à chacune des entrées d'adresse du circuit de décision 7. Les transistors 21 à 24 reçoivent respectivement sur leur grille de commande les signaux Z1 à Z4 décodés par le décodeur 10. Un jeu de quatre portes ET 25 à 28 permet de transmettre ces adresses au circuit de décision 7 lorsqu'un signal PHI de sychronisation de la lecture de données l'autorise.

Dans un exemple le circuit de dècision comporte, à l'intersection des connexions 29 à 32 et 33 à 36, des transistors T1 à T16 connectés de la manière suivante. Les drains de ces transistors sont connectés aux connexions respectivement 29 à 32, les grilles de ces transistors sont connectées aux connexions 33 à 36. A certaines intersections, les transistors n'ont pas été réalisés : ils apparaissent entre parenthèses sur la figure 3 : il s'agit par exemple des transistors T1, T6, T7, T11, T15 et T16.

Le fonctionnement du dispositif de l'invention est le suivant. Lorsque PHI vaut zéro, les transistors 21 à 24 sont bloqués, aucun courant ne passe dans la résistance 19, la sortie ERR vaut un. Durant le premier cycle 3 lorsque le signal de lecture d'instructions LI et le signal d'horloge PHI valent un tous les deux, les bascules B1 à B4 sont ouvertes. Un des signaux Z1 à Z4 traverse ces bascules et se positionne à un en un signal I1 à I4 selon la zone de la mémoire, au décodage de laquelle il a correspondu. Ceci correspond à la zone d'instruction qui doit être exécutée. Lorsque le signal PHI revient à zéro, les bascules se bloquent et I1 à I4 gardent leur valeur jusqu'à un prochain cycle où LI et PHI valent à nouveau un. Pendant le deuxième cycle 4, lorsque PHI redevient égal à un, avec LI à zéro, les signaux d'adresse Z1 à Z4 sont transformés en signaux d'adresse correspondants D1 à D4.

En fait un seul de ces signaux Z1 à Z4 vaut un, de sorte qu'un seul des transistors 21 à 24 devient conducteur. Supposons par exemple que le transistor 23 devienne conducteur parce que le signal Z3 valait un : la donnée à prélever se situait dans la zone mémoire 2T. Si la zone 1T avait été décodée comme zone d'origine de l'instruction pendant le cycle 3, le transistor T3 deviendrait conducteur pendant le cycle 4 et du courant électrique passerait au travers de la résistance 19, du transistor 23 et du transistor T3. Dans ces conditions la tension à l'entrée de l'inverseur 20 chuterait et le signal ERR monterait à un, indiquant une erreur. Cette erreur peut être exploitée pour interdire le fonctionnement du système. Par contre si la zone 1T′ avait été décodée comme zone d'origine de l'instruction pendant le cycle 3 précédent, l'absence du transistor T7 n'aurait pas permis le passage de ce courant à travers la résistance 19 ; le signal ERR serait resté à zéro, le fonctionnement du système aurait été autorisé. En définitive les transistors T1 à T16 indiquent par leur présence ou leur absence une interdiction d'un accès à une zone concernée de la mémoire en combinaison avec un accès à une autre zone concernée de la mémoire. La classification en zones de premier type et en zones de deuxième type de la mémoire est donc essentiellement liée à la nature d'instructions de données, ou même d'adresse que ces zones sont susceptibles de contenir. Elles peuvent bien entendu se situer géographiquement à des endroits mêlés dans la mémoire.

Le codage est réalisé dans l'exemple décrit par la présence physique d'un transistor. La réalisation du circuit 7 de décision peut donc être obtenue par masquage : au moment de la fabrication du circuit intégré ,on utilise un jeu de masques tel qu'à l'endroit de ce circuit les transistors nécéssaires soient mis en place. Pour certaines applications néanmoins ces transistors peuvent être remplacés par des cellules mémoire de type EPROM ou EEPROM qui ont le mérite d'être programmables et non volatiles. Le circuit de décision 7 est ainsi une mémoire morte programmée. Cette disposition peut être nécéssaire lorsque les circuits intégrés fabriqués doivent pouvoir être préalablement vérifiés et/ou programmés. Il peut alors s'avérer nécéssaire d'avoir, pour l'opération de vérification et pour des programmations exécutées par le fabricant, d'accéder à des zones mémoire qui ultérieurement seront interdites. Dans ce cas on peut décider de réaliser des transistors programmables à tous les points d'intersection de la matrice de décision. Les transistors programmables sont par exemple des transistors à grille flottante intermédiaire de type EPROM ou EEPROM, ou bien des cellules de mémoire à accès aléatoire chargées à l'initialisation du système. Lorsque les opérations préliminaires ont été effectuées sur le circuit, on peut en dernier ressort programmer le circuit de décision dont l'effet peut être d'interdire d'une manière irrévocable l'exécution de certaines instructions, y compris la programmation ultérieure de certaines zones particulières de la mémoire et surtout y compris sa propre programmation.. Ce dispositif décrit simplement peut bien entendu être étendu à un nombre de zones plus élevé dont les tailles seraient égales ou non.

On a vu qu'on pouvait avec le signal LI interdire l'exécution de certaines instructions qui nécéssitent de lire le contenu des mémoires. On a vu qu'on pouvait aussi désirer interdire l'écriture de certaines zones mémoire. Ceci peut être obtenu en utilisant un signal SV correspondant selon son niveau à l'écriture ou à la lecture des zones mémoire. On peut par exemple introduire ce signal SV en commun avec le signal d'horloge PHI dans une porte ET 37 pour valider selon les cas la transmission des informations d'adresse au circuit de décision en permettant ainsi d'obtenir un circuit de décision différent selon que l'instruction lit ou écrit une donnée.

## Revendications

1. Dispositif de protection des zones mémoire (1T, 2T) d'un système (1, 2) électronique à microprocesseur, les zones mémoire étant partagées entre des zones d'un premier type (1T) et des zones d'un deuxième type (2T), caractérisé en ce qu'il comporte :
- une matrice (7) de décision préprogrammé recevant simultanément des signaux d'adresse relatifs à des informations stockées dans les zones du premier type (I1 - I4) et des signaux d'adresse relatifs à des informations stockés dans les zones du deuxième (D1 - D4) type, pour délivrer un signal indiquant une interdiction ou une permission d'accès à une zone du deuxième type en combinaison avec un accès à une zone du premier type,
- un circuit (8) pour valider le fonctionnement du système en fonction du signal délivré par la matrice de décision en réponse aux signaux d'adresse qu'il reçoit.

2. Dispositif selon la revendication 1, caractérisé en ce qu'il comporte :
- des moyens (figure 2) pour que l'accès à des informations stockées à des adresses dans ces différents types de zone soit commandé par des signaux d'orientation (L1),
- un registre-tampon (9) pour recevoir en fonction du signal d'orientation des signaux d'adresse relatifs à des informations stockées dans les zones du premier type,
- et un circuit (17) pour introduire, dans la matrice de décision, et par l'intermédiaire du registre-tampon, les signaux d'adresse relatifs aux informations stockées dans les zones du premier type.

3. Dispositif selon l'une quelconque des revendications 1 ou 2, caractérisé en ce que les zones du premier type correspondent à des zones où sont stockées des instructions, les zones du deuxième type correspondent à des zones où sont stockées des données, ou vice versa.

4. Dispositif selon l'une quelconque des revendications 1 à 3, caractérisé en ce qu'il comporte des moyens pour programmer (T1 - T16) la matrice de décision.

5. Dispositif selon la revendication 4, caractérisé en ce qu'il comporte des moyens pour programmer (EPROM, EEPROM) la matrice de décision après des opérations de vérification et/ou de programmation du système.

6. Dispositif selon la revendication 5, caractérisé en ce qu'il comporte des moyens (7) pour interdire la programmation de la matrice de décision après que ce circuit ait été programmé.

7. Dispositif selon l'une quelconque des revendications 1 à 6, caractérisé en ce qu'il comporte des moyens (SV, 37) pour empêcher l'exécution d'instructions de lecture ou d'écriture.

## Patentansprüche

1. Einrichtung zum Schützen von Speicherzonen (1T, 2T) eines elektronischen Systems (1, 2) mit Mikroprozessor, bei der die Speicherzonen in Zonen eines ersten Typs (1T) und in Zonen eines zweiten Typs (2T) aufgeteilt sind, dadurch gekennzeichnet, daß sie umfaßt:
- eine vorprogrammierte Entscheidungsmatrix (7), die gleichzeitig Adreßsignale, die sich auf in den Zonen des ersten Typs gespeicherte Informationen (I1-I4) beziehen, und Adreßsignale, die sich auf in den Zonen des zweiten Typs gespeicherte Informationen (D1-D4) beziehen, empfängt, um ein Signal abzugeben, das ein Zugriffsverbot oder eine Zugriffserlaubnis auf eine Zone des zweiten Typs in Kombination mit einem Zugriff auf eine Zone des ersten Typs anzeigt,
- eine Schaltung (8) zum Bestätigen der Funktion des Systems in Abhängigkeit des Signale, das von der Entscheidungsmatrix in Antwort auf die Adreßsignale, die sie empfängt, abgegeben wird.

2. Einrichtung nach Anspruch 1, dadurch gekennzeichnet, daß sie umfaßt:
- Mittel (Figur 2), mit denen der Zugriff auf Informationen, die in Adressen in den verschiedenen Typen der Zone gespeichert sind, durch Orientierungssignale (L1) gesteuert wird,
- einen Zwischenspeicher (9) zum Empfangen von Adreßsignalen, die sich auf in den Zonen des ersten Typs gespeicherte Informationen beziehen, in Abhängigkeit des Orientierungssignals,
- und eine Schaltung (17) zum Einbringen der sich auf die in den Zonen des ersten Typs gespeicherten Informationen beziehenden Adreßsignale über den Zwischenspeicher in die Entscheidungsmatrix.

3. Einrichtung nach einem der Ansprüche 1 oder 2, dadurch gekennzeichnet, daß die Zonen des ersten Typs Zonen entsprechen, in denen Anweisungen gespeichert sind, und daß die Zonen des zweiten Typs Zonen entsprechen, in denen Daten gespeichert sind, oder umgekehrt.

4. Einrichtung nach einem der Ansprüche 1 bis 3, dadurch gekennzeichnet, daß sie Mittel (T1-T16) zum Programmieren der Entscheidungsmatrix umfaßt.

5. Einrichtung nach Anspruch 4, dadurch gekennzeichnet, daß sie Mittel (EPROM, EEPROM) zum Programmieren der Entscheidungsmatrix nach Überprüfungs- und/oder Programmiervorgängen des Systems umfaßt.

6. Einrichtung nach Anspruch 5, dadurch gekennzeichnet, daß sie Mittel (7) zum Verbieten der Programmierung der Entscheidungsmatrix, nachdem diese Schaltung programmiert wurde, umfaßt.

7. Einrichtung nach einem der Ansprüche 1 bis 6, dadurch gekennzeichnet, daß sie Mittel (SV, 37) zum Verhindern der Ausführung von Lese- oder Schreibbefehlen umfaßt.

## Claims

1. Device for protecting memory areas (1T, 2T) of an electronic system (1, 2) including a microprocessor, the memory areas being divided between areas of a first type (1T) and areas of a second type (2T), characterised in that it includes:
- a preprogrammed decision matrix (7) simultaneously receiving address signals relating to information stored in the areas of the first type (I1 - I4) and address signals relating to information stored in the areas of the second type (D1 - D4), to give a signal indicating prohibition of or permission for access to an area of the second type in combination with access to an area of the first type,
- a circuit (8) for enabling the functioning of the system in accordance with the signal given by the decision matrix in response to the address signals which it receives.

2. Device according to Claim 1, characterised in that it includes:
- means (Figure 2) so that access to information stored at addresses in these different types of area are controlled by orientation signals (L1),
- a buffer register (9) for receiving, in accordance with the orientation signal, address signals relating to information stored in the areas of the first type, and
- a circuit (17) for introducing, into the decision matrix, and by means of the buffer register, the address signals relating to the information stored in the areas of the first type.

3. Device according to either one of Claims 1 or 2, characterised in that the areas of the first type correspond to areas where instructions are stored, the areas of the second type correspond to areas where data are stored, or vice versa.

4. Device according to any one of Claims 1 to 3, characterised in that it includes means (T1 - T16) for programming the decision matrix.

5. Device according to Claim 4, characterised in that it includes means for programming (EPROM, EEPROM) the decision matrix after operations of checking and/or programming the system.

6. Device according to Claim 5, characterised in that it includes means (7) for inhibiting the programming of the decision matrix after the circuit has been programmed.

7. Device according to any one of Claims 1 to 6, characterised in that it includes means (SV, 37) for preventing the execution of read or write instructions.
